# EUROPEAN PATENT APPLICATION

(11) **EP 2 515 218 A1**
(43) Date of publication of application: **24.10.2012**
(21) Application number: 11163477.0
(22) Date of filing: 21.04.2011
(51) Int. Cl.: G06F 3/044

(54) **Transparent conductive structure applied to a touch panel and method of making the same**

(71) Applicant: Innovation & Infinity Global Corp., Hsinchu City (TW)
(72) Inventor: Chu, Chao-Chieh, 300, Hsinchu City (TW)
(74) Representative: Viering, Jentschura & Partner

(57) **Abstract**

A transparent conductive structure applied to a touch panel includes a substrate unit (10), a first coating unit (20), a transparent conductive unit (30), and a second coating unit (40). The substrate unit (10) includes a transparent substrate. The first coating unit (20) includes a first coating layer formed on the top surface of the transparent substrate (10). The transparent conductive unit (30) includes a transparent conductive layer (30) formed on the top surface of the first coating layer (20). The transparent conductive layer (30) includes a plurality of conductive circuits arranged to form a predetermined circuit pattern (P). The second coating unit (40) includes a second coating layer formed on the top surface of the transparent conductive layer (30) to cover the conductive circuits. The second coating layer has a touching surface (40) formed on the top side thereof, and the touching surface allows an external object (such as user's finger (F), any type of touch pen, or etc.) to touch.

## Description

### BACKGROUND OF THE INVENTION

### 1. Field of the Invention

The instant disclosure relates to a transparent conductive structure and a method of making the same, and more particularly, to a transparent conductive structure applied to a touch panel and a method of making the same.

### 2. Description of Related Art

Touch panels can be produced in a variety of types and sizes without mouse, button or direction key and can be used as input part of a wide variety of electronic devices. With information appliance developing, the touch panels have replaced keyboard and mouse to communicate with the information appliance. The touch panels provide users a friendly interface such that operations of computers or electronic products become simple, straightforward, lively and interesting. Depending on fields of applications, touch panels are applied to portable communication and information products (for example, personal digital assistant (PDA)), financial/commercial system, medical registration system, monitoring system, information guiding system, and computer-aided teaching system, and thereby enhancing convenience of handling for users.

Generally speaking, touch panels may be operated by means of infrared, ultrasonic, piezoelectric, capacitive or resistive sensing. The capacitive touch panel has inner wires made of transparent conductive materials on a glass substrate, and transmitting signals to integrated circuits (IC) configured on an outer flexible PCB or rigid PCB via peripheral conductive wires on the glass substrate. Such structure constitutes a touch sensor, which configured to an outer printed circuit board and a top protecting cover to complete a touch panel. A uniform electric field is generated on surface of the glass substrate when touching. Coordinates of the contact point are determined by variation of capacitance due to electrostatic reaction generated between the user's finger and the electric field when a user touches the touch panel.

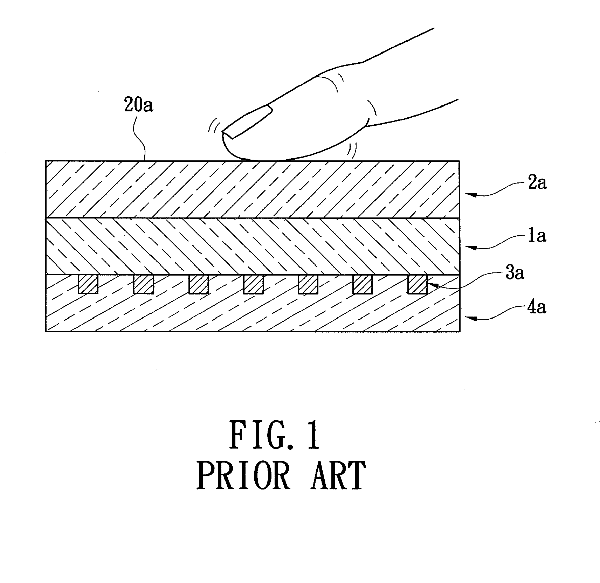

Referring to FIG. 1, the related art provides a transparent conductive structure applied to a touch panel, comprising: a PET substrate 1a, a hard coating layer 2a formed on the top surface of the PET substrate 1a, a plurality of conductive circuits 3a formed on the bottom surface of the PET substrate 1a, and a protection layer 4a formed on the bottom surface of the PET substrate 1a to cover and protect the conductive circuits 3a. However, the distance between each conductive circuit 3a and the top surface 20a (the touching surface for user to touch) of the hard coating layer 2a is too large, thus the ultra-low conductive material with the conductive range (the electric conductivity) less than 0.3 ohm/square needs to be used to make the conducive circuits 3a for achieving a predetermined sensing requirement.

### SUMMARY OF THE INVENTION

One particular aspect of the instant disclosure is to provide a transparent conductive structure applied to a touch panel and a method of making the same.

One of the embodiments of the instant disclosure provides a transparent conductive structure applied to a touch panel, comprising: a substrate unit, a first coating unit, a transparent conductive unit, and a second coating unit. The substrate unit includes at least one transparent substrate. The first coating unit includes at least one first coating layer formed on the top surface of the transparent substrate. The transparent conductive unit includes at least one transparent conductive layer formed on the top surface of the first coating layer, wherein the transparent conductive layer includes a plurality of conductive circuits, and the conductive circuits are arranged to form a predetermined circuit pattern. The second coating unit includes at least one second coating layer formed on the top surface of the transparent conductive layer to cover the conductive circuits, wherein the second coating layer has a touching surface formed on the top side thereof, and the touching surface allows an external object (such as user's finger, any type of touch pen, or etc.) to touch.

One of the embodiments of the instant disclosure provides a method of making a transparent conductive structure applied to a touch panel, comprising the steps of: providing a substrate unit including at least one transparent substrate; forming at least one first coating layer on the top surface of the transparent substrate; forming at least one transparent conductive layer on the top surface of the first coating layer, wherein the transparent conductive layer includes a plurality of conductive circuits, and the conductive circuits are arranged to form a predetermined circuit pattern; and then forming at least one second coating layer on the top surface of the transparent conductive layer to cover the conductive circuits, wherein the second coating layer has a touching surface formed on the top side thereof, and the touching surface allows an external object (such as user's finger, any type of touch pen, or etc.) to touch.

Therefore, the distance between the touching surface of the second coating layer and the predetermined circuit pattern of the transparent conductive unit is reduced (the touching surface is very close to the predetermined circuit pattern), thus the conductive range (the electric conductivity) of the predetermined circuit pattern P may be substantially between 0.8 ohm/square (Ω/□) and 3 ohm/square (Ω/□) without using conductive circuits made of ultra-low conductive material.

To further understand the techniques, means and effects the instant disclosure takes for achieving the prescribed objectives, the following detailed descriptions and appended drawings are hereby referred, such that, through which, the purposes, features and aspects of the instant disclosure can be thoroughly and concretely appreciated. However, the appended drawings are provided solely for reference and illustration, without any intention that they be used for limiting the instant disclosure.

### BRIEF DESCRIPTION OF THE DRAWINGS

FIG. 1 shows a lateral, cross-sectional, schematic view of the transparent conductive structure applied to a touch panel according to the related art;

FIG. 2 shows a flowchart of the method of making the transparent conductive structure applied to a touch panel according to the instant disclosure;

FIG. 2A shows a lateral, cross-sectional, schematic view of the semi-finished transparent conductive structure through the step S100 and the step S102 according to the instant disclosure;

FIG. 2B shows a lateral, cross-sectional, schematic view of the semi-finished transparent conductive structure through the step S104 according to the instant disclosure; and

FIG. 2C shows a lateral, cross-sectional, schematic view of the finished transparent conductive structure through the step S106 according to the instant disclosure.

### DETAILED DESCRIPTION OF THE PREFERRED EMBODIMENTS

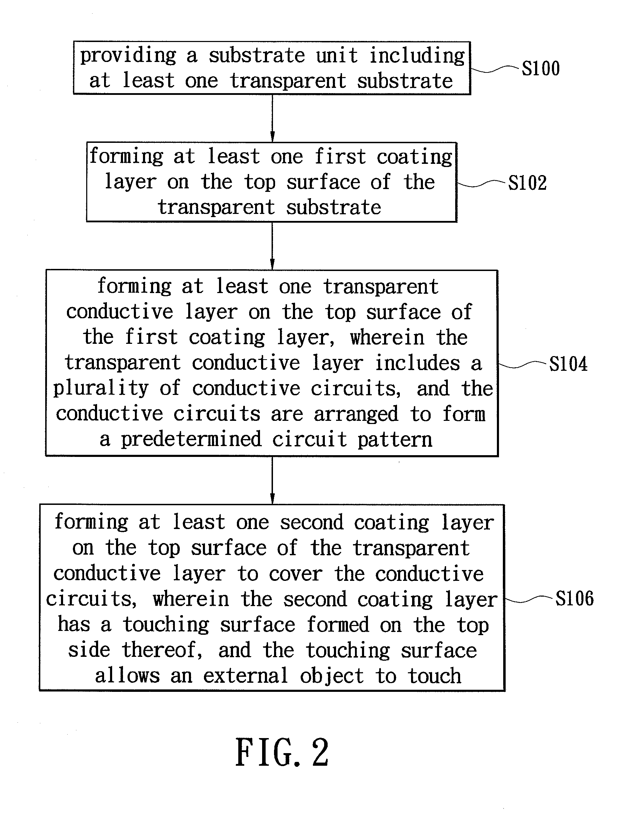

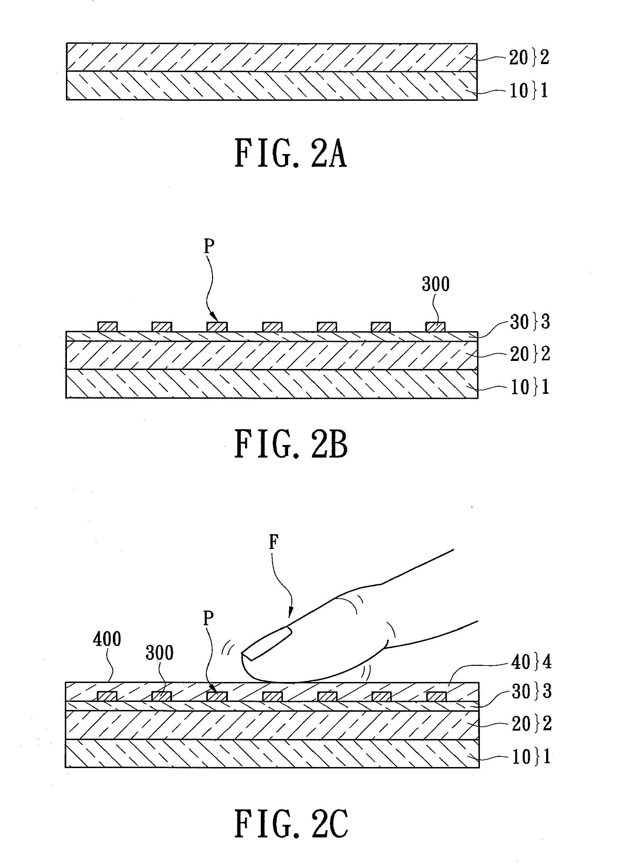

Referring to FIGS. 2 and 2A-2C, where the instant disclosure provides a method of making a transparent conductive structure applied to a touch panel, substantially comprising the steps of (from the step S 100 to the step 106 in FIG. 2):

The step S100 is that: referring to FIGS. 2 and 2A, providing a substrate unit 1 including at least one transparent substrate 10. For example, the transparent substrate 10 may be one of polyethylene terephthalate (PET), poly carbonate (PC), polyethylene (PE), poly vinyl chloride (PVC), poly propylene (PP), poly styrene (PS), and polymethylmethacrylate (PMMA), and the thickness of the transparent substrate 10 is substantially between 50 µm and 125 µm. In other words, the transparent substrate 10 can be made of any material such as plastic or glass, etc. according to different requirements.

The step S102 is that: referring to FIGS. 2 and 2A, forming at least one first coating layer 20 on the top surface of the transparent substrate 10. For example, the first coating layer 20 may be a hard coating layer made of hard material. In other words, the first coating layer 20 can be made of any hard material according to different requirements, such as the first coating layer 20 can be an ultraviolet hardening layer made of ultraviolet hardening material.

The step S 104 is that: referring to FIGS. 2 and 2B, forming at least one transparent conductive layer 30 on the top surface of the first coating layer 20, wherein the transparent conductive layer 30 includes a plurality of conductive circuits 300, and the conductive circuits 300 are arranged to form a predetermined circuit pattern P. For example, the conductive circuits 300 are divided into a plurality of X-axis tracks (not shown) extended along a transverse direction and a plurality of Y-axis tracks (not shown) extended along a lengthwise direction and respectively vertical to the X-axis tracks. In addition, each conductive circuit 300 may be a silver circuit made of silver material, an aluminum circuit made of aluminum material, a copper circuit made of copper material, or any embedded conductive circuit made of any conductive material according to different requirements. The conductive circuits 300 can be formed on the top surface of the transparent conductive layer 30 to form an indium tin oxide (ITO) conductive layer. Moreover, the conductive range (the electric conductivity) of the predetermined circuit pattern P may be substantially between 0.8 and 3 ohm/square without using conductive circuits made of ultra-low conductive material. In other words, the conductive circuits 300 can be formed on the top surface of the transparent conductive layer 30 to form the predetermined circuit pattern P according to different conductive ranges.

The step S106 is that: referring to FIGS. 2 and 2C, forming at least one second coating layer 40 on the top surface of the transparent conductive layer 30 to cover the conductive circuits 300, wherein the second coating layer 40 has a touching surface 400 formed on the top side thereof, and the touching surface 400 allows an external object (such as user's finger F, any type of touch pen, or etc.) to touch. For example, the second coating layer 40 may be a hard protection layer made of hard material, the hard protection layer may be an oxide layer having a thickness substantially between 3 µm and 5 µm, and the oxide layer may be a silicon oxide layer (such as SiO₂) made of silicon oxide material or an aluminum oxide layer (such as Al₂O₃) made of alumina material.

Referring to FIG. 2C again, the instant disclosure provides a transparent conductive structure applied to a touch panel, comprising: a substrate unit 1, a first coating unit 2, a transparent conductive unit 3, and a second coating unit 4. The substrate unit 1 includes at least one transparent substrate 10. The first coating unit 2 includes at least one first coating layer 20 formed on the top surface of the transparent substrate 10. The transparent conductive unit 3 includes at least one transparent conductive layer 30 formed on the top surface of the first coating layer 20. The transparent conductive layer 30 includes a plurality of conductive circuits 300, and the conductive circuits 300 are arranged to form a predetermined circuit pattern P. The second coating unit 4 includes at least one second coating layer 40 formed on the top surface of the transparent conductive layer 30 to cover the conductive circuits 300. The second coating layer 40 has a touching surface 400 formed on the top side thereof, and the touching surface 400 allows an external object (such as user's finger F, any type of touch pen, or etc.) to touch.

For example, the transparent substrate 10 may be polyethylene terephthalate (PET), poly carbonate (PC), polyethylene (PE), poly vinyl chloride (PVC), poly propylene (PP), poly styrene (PS), or polymethylmethacrylate (PMMA), and the thickness of the transparent substrate is between 50 µm and 125 µm. The first coating layer 20 may be a hard coating layer, and the hard coating layer may be an ultraviolet hardening layer. Each conductive circuit 300 may be a silver circuit, an aluminum circuit, a copper circuit, or any conductive circuit, and the conductive circuits 300 can be formed on the top surface of the transparent conductive layer 30. The conductive range of the predetermined circuit pattern P may be substantially between 0.8 and 3 ohm/square. The second coating layer 40 may be a hard protection layer, the hard protection layer may be an oxide layer having a thickness substantially between 3 µm and 5 µm, and the oxide layer may be a silicon oxide layer or an aluminum oxide layer.

In conclusion, the distance between the touching surface of the second coating layer and the predetermined circuit pattern of the transparent conductive unit is reduced, thus the conductive range (the electric conductivity) of the predetermined circuit pattern P may be substantially between 0.8 and 3 ohm/square without using conductive circuits made of ultra-low conductive material.

The above-mentioned descriptions merely represent the preferred embodiments of the instant disclosure, without any intention or ability to limit the scope of the instant disclosure which is fully described only within the following claims. Various equivalent changes, alterations or modifications based on the claims of instant disclosure are all, consequently, viewed as being embraced by the scope of the instant disclosure.

## Claims

1. A transparent conductive structure applied to a touch panel, comprising:
a substrate unit including at least one transparent substrate;
a first coating unit including at least one first coating layer formed on the top surface of the transparent substrate;
a transparent conductive unit including at least one transparent conductive layer formed on the top surface of the first coating layer, wherein the transparent conductive layer includes a plurality of conductive circuits, and the conductive circuits are arranged to form a predetermined circuit pattern; and
a second coating unit including at least one second coating layer formed on the top surface of the transparent conductive layer to cover the conductive circuits, wherein the second coating layer has a touching surface formed on the top side thereof for an external object to touch.

2. The transparent conductive structure of claim 1, wherein the transparent substrate is polyethylene terephthalate (PET), poly carbonate (PC), polyethylene (PE), poly vinyl chloride (PVC), poly propylene (PP), poly styrene (PS), or polymethylmethacrylate (PMMA), and the thickness of the transparent substrate is between 50 µm and 125 µm.

3. The transparent conductive structure of claim 1, wherein the first coating layer is a hard coating layer, and the hard coating layer is an ultraviolet hardening layer.

4. The transparent conductive structure of claim 1, wherein each conductive circuit is a silver circuit, an aluminum circuit, or a copper circuit, and the conductive circuits are formed on the top surface of the transparent conductive layer.

5. The transparent conductive structure of claim 1, wherein the conductive range of the predetermined circuit pattern is between 0.8 and 3 ohm/square.

6. The transparent conductive structure of claim 1, wherein the second coating layer is a hard protection layer, the hard protection layer is an oxide layer having a thickness between 3 µm and 5 µm, and the oxide layer is a silicon oxide layer or an aluminum oxide layer.

7. A method of making a transparent conductive structure applied to a touch panel, comprising the steps of:
providing a substrate unit including at least one transparent substrate;
forming at least one first coating layer on the top surface of the transparent substrate;
forming at least one transparent conductive layer on the top surface of the first coating layer, wherein the transparent conductive layer includes a plurality of conductive circuits, and the conductive circuits are arranged to form a predetermined circuit pattern; and
forming at least one second coating layer on the top surface of the transparent conductive layer to cover the conductive circuits, wherein the second coating layer has a touching surface formed on the top side thereof for an external object to touch.

8. The method of claim 7, wherein the transparent substrate is polyethylene terephthalate (PET), poly carbonate (PC), polyethylene (PE), poly vinyl chloride (PVC), poly propylene (PP), poly styrene (PS), or polymethylmethacrylate (PMMA), and the thickness of the transparent substrate is between 50 µm and 125 µm.

9. The method of claim 7, wherein the first coating layer is a hard coating layer made of hard material, and the hard coating layer is an ultraviolet hardening layer.

10. The method of claim 7, wherein each conductive circuit is a silver circuit made of silver material, an aluminum circuit made of aluminum material, or a copper circuit made of copper material, and the conductive circuits are formed on the top surface of the transparent conductive layer.

11. The method of claim 7, wherein the conductive range of the predetermined circuit pattern is between 0.8 and 3 ohm/square.

12. The method of claim 7, wherein the second coating layer is a hard protection layer made of hard material, the hard protection layer is an oxide layer having a thickness between 3 µm and 5 f.1m, and the oxide layer is a silicon oxide layer made of silicon oxide material or an aluminum oxide layer made of alumina material.
